# EUROPÄISCHE PATENTANMELDUNG

(11) **EP 2 399 805 A2**
(43) Veröffentlichungstag der Anmeldung: **28.12.2011**
(21) Anmeldenummer: 11004924.4
(22) Anmeldetag: 16.06.2011
(51) Int. Cl.: B62D 25/04, B62D 25/08, B62D 25/20

(54) **Hintere Fahrzeugkarosserie**

(30) Priorität: 23.06.2010 DE 102010024716
(71) Anmelder: Volkswagen AG, 38436 Wolfsburg (DE)
(72) Erfinder: Schneider, Ralph, 38518 Gifhorn (DE); Dang, Tran Minh, 38440 Wolfsburg (DE)

(57) **Zusammenfassung**

Vorgeschlagen wird eine Fahrzeugkarosserie (1), mit einem heckseitig angeordneten Dachquerträger (5), an dem eine Heckklappe anbringbar ist, wobei in Fahrzeugquerrichtung (Y-Richtung) der Fahrzeugkarosserie (1) gesehen am Dachquerträger (5) zwei gegenüberliegend angeordnete, Säulenstrukturen ausbildende Heckabschlussprofile (6, 7) angeschlossen sind, die ihrerseits jeweils überwiegend durch ein im Querschnitt nach Fahrzeug-hinten offenes Hohlprofil gebildet sind.

## Beschreibung

Die Erfindung betrifft eine Fahrzeugkarosserie, mit einem heckseitig angeordneten Dachquerträger, an dem eine Heckklappe anbringbar ist.

Aus der DE 197 02 543 A1 ist eine Klappen- oder Türanordnung an einem Fahrzeug, mit einem umlaufend geschlossenen Halterahmen bekannt, welcher durch ein geschlossenes Profil gebildet ist und als mit Funktionseinheiten komplettiertes Modul hinter den Radkästen am Fahrzeugaufbau anbringbar ist. Die DE 100 41 645 A1 beschreibt ein Verfahren zum Zusammenbau von Bauteilen, bei dem ein vorgefertigter umlaufend geschlossener Heckportalrahmen hinter den Radkästen mit einer Bodengruppe, mit Karosseriewänden und einem Dachelement verbunden wird. Die DE 199 13 532 A1 offenbart ebenfalls einen vorgefertigten umlaufenden geschlossenen Versteifungsrahmen, der seinerseits als Profilrahmen ausgeführt ist und aus einem unteren U-förmigen, stranggepressten und streckgebogenen Rahmenhauptteil, einem oberen, ebenfalls als Strangpressprofil ausgeführten Rahmenholm, und zwei als Gussteile ausgeführten Winkelverbindern besteht. Besagter Profilrahmen wird ebenfalls hinter den Radkästen mit der Fahrzeugkarosserie verbunden. Aus der DE 100 36 399 A1 ist weiterhin ein Heckbereich eines Fahrzeugs offenbart, bei welchem jeweils seitlich der Radhäuser ein Seitenteil angeordnet ist, welches in eine C-Säule übergeht und mit einem Dachquerträger fest verbunden ist. Beidseitig und innerhalb eines Kofferraums der Fahrzeugkarosserie ist zwischen den Karosseriebauteilen Bodenblech, Radhaus, Seitenteil und Rückwand-Heckabschluss eine räumliche und annähernd kastenförmige Struktur angeordnet, welche geeignet ist, eine wirkungsvolle Crashebene oberhalb der Seitenlängsträger der Fahrzeugkarosserie zu schaffen. Aus der DE 101 09 784 A1 ist des Weiteren eine selbstragende Karosserie für einen Personenkraftwagen, mit einer im Bereich zwischen einer Fahrgastzelle und einem Kofferraum angeordneten Versteifungsstruktur bekannt, die sich über die Fahrzeugbreite erstreckt und die auf jeder Fahrzeugseite im Bereich eines Radkastens hochgezogen ist und sich oberhalb des Radkastens an einer Seitenwand abstützt. Schließlich ist aus der DE 10 2004 049 976 A1 eine Tragstruktur eines Endbereiches einer Fahrzeugkarosserie bekannt, die in Verbesserung des Deformationsverhaltens und der Steifigkeit des besagten Endbereiches einen ersten Querträger, welcher in den Seitenbereichen mit ersten Heckverstärkungsträgem verbunden ist, die jeweils zum Bilden eines ersten Lastpfades mit zugeordneten oberen Längselementen gekoppelt sind, sowie einen zweiten Querträger umfasst, welcher seinerseits in den Seitenbereichen zweite Heckverstärkungsträger aufweist, die Jeweils zum Bilden eines zweiten von dem ersten Lastpfad unabhängigen Lastpfades ebenfalls mit den zugeordneten oberen Längselementen gekoppelt sind.

Hiervon ausgehend ist es Aufgabe der Erfindung, eine weiter verbesserte Fahrzeugkarosserie, mit einem heckseitig angeordneten Dachquerträger, an dem eine Heckklappe anbringbar ist, zu schaffen, welche unkompliziert und einfach im Aufbau und in der Herstellung ist sowie erhöhten Anforderungen an die Steifigkeit, Insbesondere auch an die Torsionssteifigkeit der Fahrzeugkarosserie, insbesondere eines Personenkraftwagens, gerecht wird. Fernerhin soll eine Reduzierung der Teilevielzahl und des Gewichts ermöglicht sowie eine bauraumsparende Anordnung von Anbauteilen, wie Rückleuchten, gestattet sein.

Ausgehend von einer Fahrzeugkarosserie, mit einem heckseitig angeordneten Dachquerträger, an dem eine Heckklappe anbringbar ist, wird die gestellte Aufgabe dadurch gelöst, dass in Fahrzeugquerrichtung (Y-Richtung) der Fahrzeugkarosserie gesehen am Dachquerträger zwei gegenüberliegend angeordnete, Säulenstrukturen ausbildende Heckabschlussprofile angeschlossen sind, die ihrerseits jeweils überwiegend durch ein im Querschnitt nach Fahrzeug-hinten offenes Hohlprofil gebildet sind.

Besagte Heckabschlussprofile kombinieren vorteilhaft eine hohe Steifigkeit mit einer etwaigen bauraumsparenden Anordnung bzw. Aufnahme von diversen Anbauteilen, wie Rückleuchten und anderen elektrischen Komponenten.

Die Unteransprüche beschreiben bevorzugte Weiterbildungen oder Ausgestaltungen der Erfindung.

Danach können die Heckabschlussprofile jeweils durch ein einfach und kostengünstig herzustellendes U-Profil gebildet sein. Vorteilhaft können des Weiteren die Heckabschlussprofile mittel- oder unmittelbar mit einem unteren Querträger fest verbunden sein. Weiter können die Heckabschlussprofile mittel- oder unmittelbar an eine benachbarte Bodengruppe der Fahrzeugkarosserie angeschlossen sein. Durch diese Maßnahmen ist eine im Hinblick auf den Stand der Technik weiter erhöhte Steifigkeit der Fahrzeugkarosserie, insbesondere eine erhöhte Torsionssteifigkeit derselben zu verzeichnen, da ein torsionssteifer Rahmen gebildet ist, der durch seine einfache Bauweise eine Reduzierung der Teilevielzahl und des Gewichts ermöglicht. Als besonders praxisnah hat sich erwiesen, die Heckabschlussprofile an eine Radhausstruktur der Bodengruppe anzuschließen. Zweckmäßigerweise können die hinteren Radhausstrukturen jeweils zweischalig aus einem Radhaus-innen und einem Radhaus-außen gebildet sein, wobei besagte Heckabschlussprofile dann vorteilhafterweise mittelbar oder unmittelbar am Radhaus-innen angeschlossen werden können. Ferner können die Heckabschlussprofile jeweils unter Vermittlung eines Verbindungsteiles sowohl an die hintere Radhausstruktur als auch an den unteren Querträger angeschlossen sein, wodurch die Herstellung der Bauteile und die Montage derselben vereinfacht ist. Komplizierte Bauteilstrukturen können auf ein Minimum reduziert werden. Wie die Erfindung weiter vorsieht, können die Heckabschlussprofile jeweils durch einen oberen ersten, einen Dichtkanal ausbildenden Hohlprofilabschnitt und einen unteren zweiten, sich an den oberen ersten Hohlprofilabschnitt anschließenden Hohlprofilabschnitt zur Aufnahme zumindest einer oder mehrerer Rückleuchten gebildet sein. Durch diese Maßnahme ist vorteilhaft eine Wasserabführung mit einer Aufnahmefunktion für besagte Rückleuchten kombiniert. Wie die Erfindung noch vorsieht, können die Heckabschlussprofile ein- oder mehrteilig ausgebildet sein.

Schließlich kann vorgesehen sein, dass der heckseitig angeordnete Dachquerträger Bestandteil eines Versteifungsrahmens der Fahrzeugkarosserie in Form eines nach unten offenen Hohlprofilrahmens ist, der seinerseits in Fahrzeugquerrichtung (Y-Richtung) gesehen beidseitig der Fahrzeugkarosserie je eine Säulenstruktur aufweist, die zum einen mittels des Dachquerträgers untereinander fest verbunden und zum anderen auf je einer der hinteren Radhausstrukturen der hinteren Bodengruppe der Fahrzeugkarosserie abgestützt und an derselben befestigt sind. Gegebenenfalls können dabei die Heckabschlussprofile, als Verstärkungsprofile fungierend, zumindest mit den Säulenstrukturen des Versteifungsrahmens fest verbunden sein. Eine Fahrzeugkarosserie mit einem derartigen Rahmenverbund entspricht in hohem Maße dem angestrebten Leichtbaukonzept. Durch die unmittelbare Anbindung des Versteifungsrahmens an die hinteren Radhausstrukturen der Fahrzeugkarosserie ist bereits eine hohe Steifigkeit, insbesondere auch Torsionssteifigkeit, der Fahrzeugkarosserie in dem in Rede stehenden Abschnitt derselben gewährleistet, welche die Anbindung einer Heckklappe gestattet. Durch den durch die Heckabschlussprofile, den Dachquerträger und den unteren Querträger gebildeten Rahmen, der in Kombination mit dem Versteifungsrahmen einen sogenannten Doppelrahmen ausbildet, wird besagte Steifigkeit der Fahrzeugkarosserie zumindest im Heckabschnitt derselben maximiert. Überdies bewirkt ein solcher Doppelrahmen einen hohen Crashwiderstand, insbesondere im Hinblick auf etwaige Heck- und/oder Seitencrashs. Diese Fahrzeugkarosserie empfiehlt sich insbesondere für sogenannte Kurzheck-Fahrzeuge.

Die Erfindung wird nachstehend anhand eines In den Zeichnungen schematisch dargestellten Ausführungsbeispieles näher erläutert. Es zeigen:
- Fig. 1: den Heckbereich einer Fahrzeugkarosserie eines Kraftfahrzeugs, insbesondere Personenkraftwagens, mit Seitenbeplankung und Dachblech in einer perspektivischen Ansicht von schräg hinten,
- Fig. 2: die Rohbaukarosserie nach Fig. 1 in einer perspektivischen Ansicht von schräg hinten mit einer Bodengruppe,
- Fig. 3: die Ansicht "A" nach Fig. 2
- Fig. 4: die perspektivische Innenansicht auf den linken Heckbereich der Fahrzeugkarosserie, und

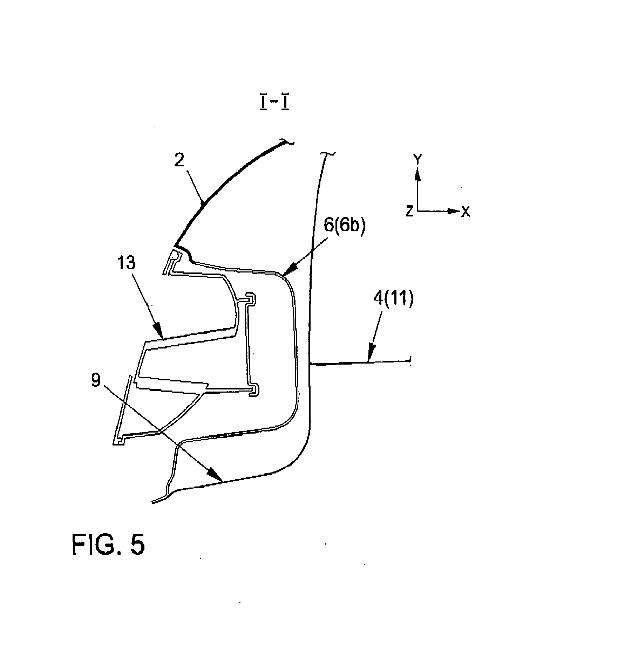

- Fig. 5: den Schnitt I-I nach Fig: 1.

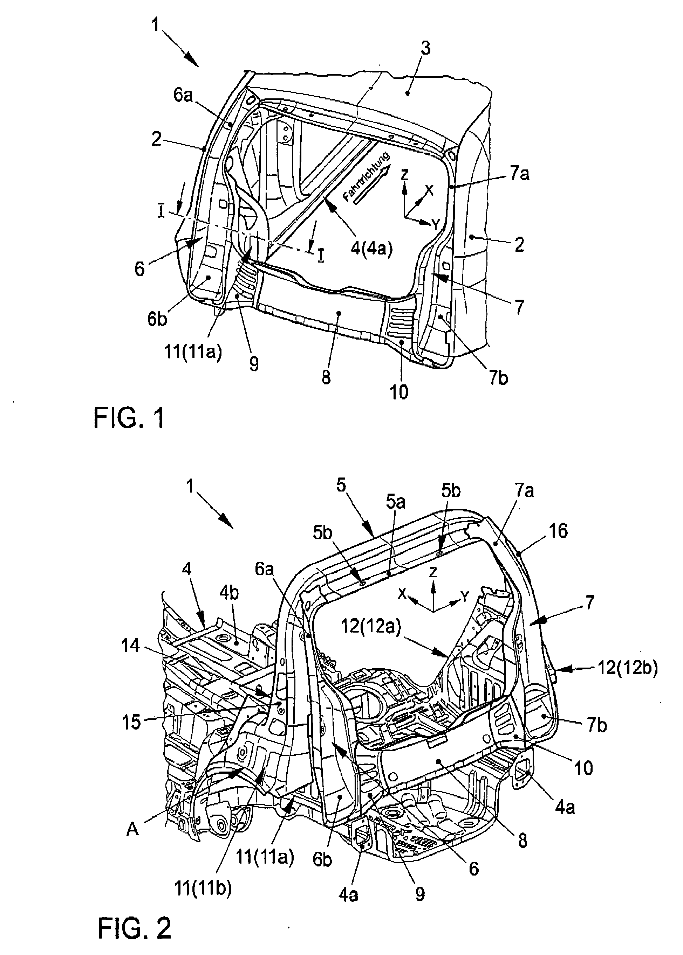

Fig. 1 zeigt demnach den Heckbereich einer Fahrzeugkarosserie 1 eines Kraftfahrzeugs, hier eines Personenkraftwagens in einer Kurzheckvariante, mit einer Karosserieöffnung für eine an sich bekannte und demgemäß nicht näher dargestellte Heckklappe: Ferner sind an sich bekannte Seitenbeplankurigen 2 und ein an sich bekanntes Fahrzeugdach 3 respektive dessen Dachblech dargestellt. Fig. 2 zeigt die Rohbaukarosserie der Fahrzeugkarosserie 1 nach Fig. 1, d. h., ohne Fahrzeugdach 3 respektive Dachblech, wobei hier zusätzlich noch der hintere Abschnitt einer Bodengruppe 4 derselben mit insbesondere an sich bekannten äußeren Längsträgern 4a und einem an sich bekannten Bodenblech 4b dargestellt ist.

Besagte Karosserieöffnung wird durch einen Rahmen gebildet, der seinerseits einen heckseitig angeordneten Dachquerträger 5, an den beidenends je ein eine Säulenstruktur ausbildendes Heckabschlussprofil 6, 7 angeschlossen ist, sowie einen die unteren Enden der Heckabschlussprofile 6, 7 untereinander verbindenden unteren Querträger 8 aufweist (insbes. Fig. 2).

Der Dachquerträger 5 weist ferner einen nach Fahrzeug-hinten abgestellten Befestigungsflansch 5a mit Bohrungen 5b auf, die der Festlegung von an sich bekannten und demgemäß hier nicht näher dargestellten Schwenklagern der Heckklappe dienen.

Vorliegend sind die Heckabschlussprofile 6, 7 jeweils mittelbar, d. h., unter Vermittlung eines Verbindungsteiles 9,10 an den unteren Querträger 8 angeschlossen. Denkbar ist es auch und demgemäß durch die Erfindung mit erfasst, die Heckabschlussprofile 6, 7 unmittelbar an den unteren Querträger 8 anzuschließen (nicht näher dargestellt).

Des Weiteren sind die Heckabschlussprofile 6, 7 über besagte Verbindungsteile 9, 1 0 an die benachbarte Bodengruppe 4 der Fahrzeugkarosserie 1, vorliegend heckseitig hinterer Radhausstrukturen 11, 12 der Bodengruppe 4 an die jeweils zugeordnete Radhausstruktur 11, 12 angeschlossen.

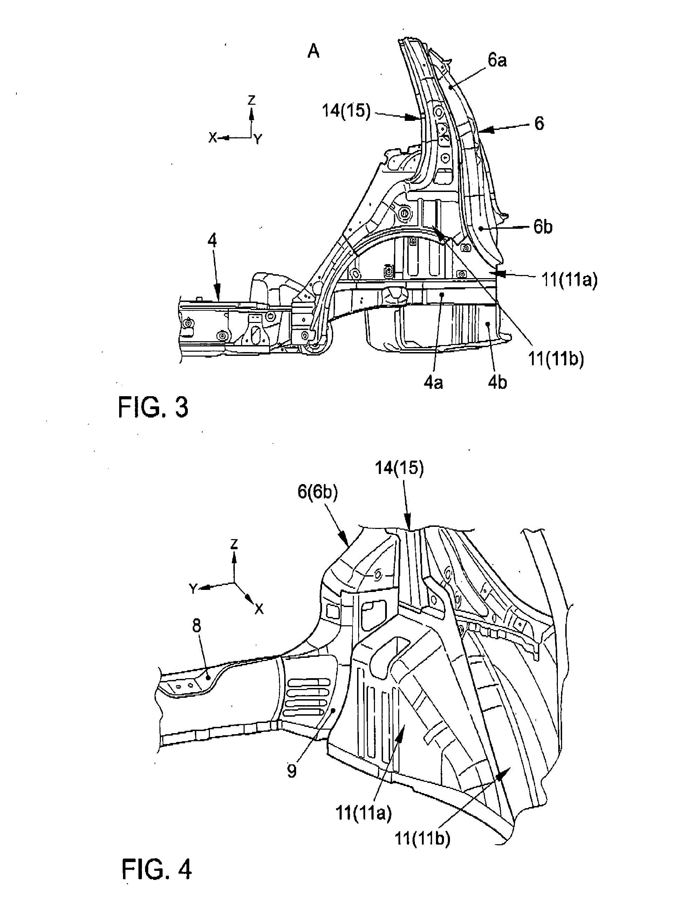

Da die besagten Radhausstrukturen 11, 12 jeweils zweischalig, nämlich aus einem Radhaus-innen 11a, 12a und einem Radhaus-außen 11b, 12b gebildet sind, sind vorliegend die Heckabschlussprofile 6, 7 zweckmäßigerweise über besagte Verbindungsteile 9, 10 an das jeweilige Radhaus-innen 11a, 12a angeschlossen (vgl. insbes. Fig. 4).

Gemäß den Fig. 1 und 2 sind die Heckabschlussprofile 6, 7 überwiegend durch ein im Querschnitt nach Fahrzeug-hinten offenes Hohlprofil gebildet, welches wie vorliegend beispielsweise ein U-Profil sein kann. Sicherlich sind auch andere geeignete an sich bekannte, im Querschnitt nach Fahrzeug-hinten offene Hohlprofile denkbar und demgemäß durch die Erfindung mit erfasst. Das nach hinten offene Hohlprofil der Heckabschlussprofile 6, 7 bietet zum einen eine komfortable Wasserabfuhr. Zum anderen dient es der Anordnung und Aufnahme von zumindest einer oder mehreren Rückleuchten 13 (vgl. Fg. 5). Ein derartiges Hohlprofil der Heckabschlussprofile 6, 7 eröffnet des Weiteren die Möglichkeit, designabhängig verschiedene Leuchtengeometrien und -positionen im selben Rohbau zu realisieren.

Die Heckabschlussprofile 6, 7 sind überdies durch einen ersten oberen, einen Dichtkanal ausbildenden Hohlprofilabschnitt 6a, 7a und einen zweiten unteren, sich an den ersten oberen Hohlprofilabschnitt 6a, 7a anschließenden Hohlprofilabschnitt 6b, 7b gebildet. Hier ist sowohl eine einteilige als auch eine mehrteilige Ausbildung der Heckabschlussprofile 6, 7 denkbar.

Wie insbesondere der Fig. 2 weiter zu entnehmen ist, ist vorliegend der Dachquerträger 5 Bestandteil eines Versteifungsrahmens 14 der Fahrzeugkarosserie 1, der sich seinerseits auf der Bodengruppe 4 abstützt. Die Erfindung beschränkt sich jedoch nicht auf diese hier konkret dargestellte Ausführungsform der Fahrzeugkarosserie 1, sondern umfasst auch jedwede andere an sich bekannte Abstützung des Dachquerträgers 5, beispielsweise über Seitenteile, auf der Bodengruppe 4 (nicht näher dargestellt).

Ungeachtet dessen ist vorliegend eine Abstützung mittels eines Versteifungsrahmens 14 in Form eines nach unten offenen Hohlprofilrahmens gewählt. Besagter Hohlprofilrahmen weist seinerseits in Fahrzeugquerrichtung (Y-Richtung) gesehen beidseitig der Fahrzeugkarosserie 1 je eine Säulenstruktur 15, 16 auf, die zum einen mittels des Dachquerträgers 5 untereinander fest verbunden und zum anderen auf je einer der hinteren Radhausstrukturen 11, 12, vorliegend deren Radhaus-innen 11a, 12a abgestützt und an denselben befestigt sind.

Wie insbesondere Fig. 3 zu entnehmen ist, schmiegen sich die Heckabschlussprofile 6, 7 vorzugsweise über ihre gesamte Längserstreckung an die Säulenstrukturen 15, 16 des Versteifungsrahmens 14 an und können, abgesehen von dem jeweiligen bereits vorstehend beschriebenen oberen und unteren Anbindungspunkt an den Dachquerträger 5 bzw, die Bodenstruktur 4 der Fahrzeugkarosserie 1 weitere hier nicht näher dargestellte Anbindungspunkte aufweisen, die zwischen dem oberen und dem unteren Anbindungspunkt vorgesehen sind und die Heckabschlussprofile 6, 7 und die Säulenstrukturen 15, 16 untereinander verbinden. Durch diese Maßnahme wird vorteilhaft ein äußerst steifes Doppel-Hohlprofil ausgebildet. Die Heckabschlussprofile 6, 7 fungieren demgemäß vorteilhaft als Verstärkungsprofile für den Versteifungsrahmen 14.

### Bezugszeichenliste

- 1: Fahrzeugkarosserie
- 2: Seitenbeplankung
- 3: Fahrzeugdach
- 4: Bodengruppe
- 4a: Längsträger
- 4b: Bodenblech
- 5: Dachquerträger
- 5a: Befestigungsflansch
- 5b: Bohrungen
- 6: Heckabschlussprofil
- 6a: erster Hohlprofilabschnitt
- 6b: zweiter Hohlprofilabschnitt
- 7: Heckabschlussprofil
- 7a: erster Hohlprofilabschnitt
- 7b: zweiter Hohlprofilabschnitt
- 8: unterer Querträger
- 9: Verbindungsteil
- 10: Verbindungsteil
- 11: Radhausstruktur
- 11a: Radhaus-innen
- 11b: Radhaus-außen
- 12: Radhausstruktur
- 12a: Radhaus-innen
- 12b: Radhaus-außen
- 13: Rückleuchte
- 14: Versteifungsrahmen
- 15: Säulenstruktur
- 16: Säulenstruktur

## Patentansprüche

1. Fahrzeugkarosserie (1), mit einem heckseitig angeordneten Dachquerträger (5), an dem eine Heckklappe anbringbar ist, **dadurch gekennzeichnet, dass** in Fahrzeugquerrichtung. (Y-Richtung) der Fahrzeugkarosserie (1) gesehen am Dachquerträger (5) zwei gegenüberliegend angeordnete, Säulenstrukturen ausbildende Heckabschlussprofile (6, 7) angeschlossen sind, die ihrerseits jeweils überwiegend durch ein im Querschnitt nach Fahrzeug-hinten offenes Hohlprofil gebildet sind.

2. Fahrzeugkarosserie (1) nach Anspruch 2, **dadurch gekennzeichnet, dass** die Heckabschlussprofile (6, 7) jeweils durch ein U-Profil gebildet sind.

3. Fahrzeugkarosserie (1) nach Anspruch 1 oder 2, **dadurch gekennzeichnet, dass** die Heckabschlussprofile (6, 7) mittel- oder unmittelbar mit einem unteren Querträger (8) fest verbunden sind.

4. Fahrzeugkarosserie (1) nach einem der Ansprüche 1 bis 3, **dadurch gekennzeichnet, dass** die Heckabschlussprofile (6, 7) mittel- oder unmittelbar an eine benachbarte Bodengruppe (4) der Fahrzeugkarosserie (1) angeschlossen sind.

5. Fahrzeugkarosserie (1) nach Anspruch 4, **dadurch gekennzeichnet, dass** die Heckabschlussprofile (6, 7) an eine Radhausstruktur (11, 12) der Bodengruppe (4) angeschlossen sind.

6. Fahrzeugkarosserie (1) nach Anspruch 5, **dadurch gekennzeichnet, dass** die hinteren Radhausstrukturen (6, 7) jeweils zweischalig aus einem Radhaus-innen (6a, 7a) und einem Radhaus-außen (6b, 7b) gebildet sind und besagte Heckabschlussprofile (6, 7) mittelbar oder unmittelbar am Radhaus-innen (6a, 7a) angeschlossen sind.

7. Fahrzeugkarosserie (1) nach einem der Ansprüche 3 bis 6, **dadurch gekennzeichnet, dass** die Heckabschlussprofile (6, 7) jeweils unter Vermittlung eines Verbindungsteiles (9, 10) sowohl an die hintere Radhausstruktur (11, 12) als auch an den unteren Querträger (8) angeschlossen sind.

8. Fahrzeugkarosserie (1) nach einem der Ansprüche 1 bis 7, **dadurch gekennzeichnet, dass** die Heckabschlussprofile (6, 7) jeweils durch einen oberen ersten, einen Dichtkanal ausbildenden Hohlprofilabschnitt (6a, 7a) und einen unteren zweiten, sich an den oberen ersten Hohlprofilabschnitt (6a, 7a) anschließenden Hohlprofilabschnitt (6b, 7b) zur Aufnahme zumindest einer oder mehrerer Rückleuchten gebildet ist.

9. Fahrzeugkarosserie (1) nach einem der Ansprüche 1 bis 7, **dadurch gekennzeichnet, dass** die Heckabschlussprofile (6, 7) ein- oder mehrteilig ausgebildet sind.

10. Fahrzeugkarosserie (1) nach einem der Ansprüche 1 bis 9, **dadurch gekennzeichnet, dass** der heckseitig angeordnete Dachquerträger (5) Bestandteil eines Versteifungsrahmens (14) der Fahrzeugkarosserie (1) in Form eines nach unten offenen Hohlprofilrahmens ist, der seinerseits in Fahrzeugquerrichtung (Y-Richtung) gesehen beidseitig der Fahrzeugkarosserie (1) je eine Säulenstruktur (15, 16) aufweist, die zum einen mittels des Dachquerträgers (5) untereinander fest verbunden und zum anderen auf je einer der hinteren Radhausstrukturen (11,12) der hinteren Bodengruppe (4) der Fahrzeugkarosserie (1) abgestützt und an derselben befestigt sind, und dass gegebenenfalls die Heckabschlussprofile (6, 7), als Verstärkungsprofile fungierend, zumindest mit den Säulenstrukturen (15, 16) des Versteifungsrahmens (14) fest verbunden sind.
